# EUROPÄISCHE PATENTANMELDUNG

(11) **EP 1 313 048 A2**
(43) Veröffentlichungstag der Anmeldung: **21.05.2003**
(21) Anmeldenummer: 02008770.6
(22) Anmeldetag: 18.04.2002
(51) Int. Cl.: G06F 17/60

(54) **Verfahren und Anordnung zur Zustellung von luftfahrtrelevanten Daten an Datenbanken**

(30) Priorität: 25.04.2001 DE 10120370
(71) Anmelder: Becker Flugfunkwerk GmbH, 77836 Rheinmünster (DE)
(72) Erfinder: Dietmüller, Werner, 76547 Sinzheim (DE)
(74) Vertreter: Zipse + Habersack

(57) **Zusammenfassung**

Die Erfindung betrifft ein Verfahren zur Zustellung von luftfahrtrelevanten Daten an Datenbanken in aus Rechen- und Speichereinheit mit Anzeigeeinheit bestehende Navigationsgeräte in Flugzeugen. Dieses Verfahren ist dadurch gekennzeichnet, daß die Daten von einem Dienstanbieter als Sender über GSM-Module (5) eines Funktelefonbetreibers an die Rechen- und Speichereinheit (1) des Navigationsgerätes übermittelt werden. Ferner betrifft die Erfindung eine Anordnung zur Durchführung des Verfahrens. Diese Anordnung ist dadurch gekennzeichnet, daß die Rechen- und Speichereinheit (1) des Navigationsgerätes im Flugzeug mit einem in der Funktelefontechnologie üblichen GSM-Modul (5) mit Antenne (12) und einem entsprechenden GSM-Zugang beim Datenversender angeordnet ist.

## Beschreibung

Die Erfindung betrifft ein Verfahren zur Zustellung von luftfahrtrelevanten Daten an Datenbanken in aus Rechen- und Speichereinheit mit Anzeigeeinheit bestehende Navigationsgeräte in Flugzeugen. Die Erfindung betrifft ferner eine Anordnung zur Durchführung dieses Verfahrens.

Zur Navigation während des Fluges werden Datenbanken benötigt, deren Updates bis jetzt von verschiedenen Dienstanbietern über Datenträger vorgenommen wurden. Die Datenträger wurden normalerweise per Post an die Betreiber versandt, um dann im Flugzeug zur Verfügung zu stehen. Dieser Vorgang ist aufwendig und fehleranfällig.

Es sind ferner Systeme zur Datenübertragung bzw. -zustellung bekannt. Diese setzen aber spezielle, teuere, aufwendige (Gatelink für Airliner) und drahtlose (über speziellen Datenfunk oder Satellitenkommunikation) Infrastrukturen voraus, die für die allgemeine Luftfahrt untauglich sind.

Der vorliegenden Erfindung liegt die Aufgabe zugrunde, ein Verfahren der eingangs genannten Art zu schaffen, bei dem der Vorgang der Zustellung der Daten automatisch erfolgt, wobei ein zusätzlicher Nutzen darin besteht, daß das aktuelle Flugwetter und Flugpläne übermittelt werden können.

Zur Lösung der gestellten Aufgabe wird ein Verfahren gemäß Anspruch 1 vorgeschlagen.

Gemäß Anspruch 2 wird eine Weiterentwicklung des Verfahrens nach Anspruch 1 vorgeschlagen, und die Ansprüche 3 und 4 geben Anordnungen bekannt, mit denen das erfindungsgemäße Verfahren vorzugsweise durchgeführt werden kann.

Anhand der Zeichnung sollen am Beispiel eines Blockdiagramms und einer Geräteansicht das Verfahren und die Anordnung gemäß der Erfindung näher erläutert werden.

### In der Zeichnung zeigt

**Fig. 1** ein Blockdiagramm einer erfindungsgemäßen Anordnung.
**Fig. 2** zeigt eine auseinandergezogene Gehäuseansicht eines Gerätes für die Anordnung gemäß der Erfindung.

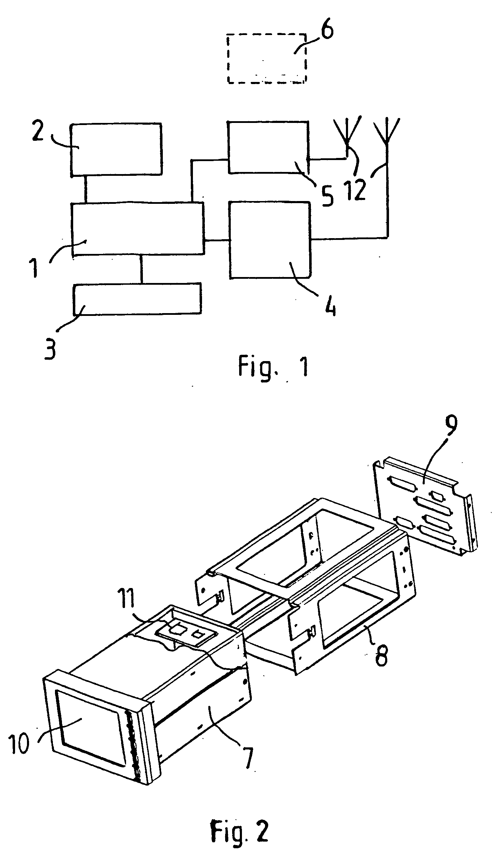

Wie sich aus Fig. 1 ergibt, besteht die Zentraleinheit des Navigationssystems aus einer Rechen- und Speichereinheit 1, die mit einer Anzeigeeinheit 2, beispielsweise einem Bildschirm, verbunden ist. An die Rechen- und Speichereinheit 1 können weitere Sensoren 3 angeschlossen werden. Die Rechen- und Speichereinheit 1 ist normalerweise zumindest mit einem GPS-Empfänger 4 verbunden, der eine Navigationseinheit darstellt und auf der Anzeigeeinheit 2 den Standort bekannt gibt.

Gemäß der Erfindung ist nun- ein GSM-Modul 5, wie es von Funktelefonsystemen bekannt ist, integriert. Dieses Modul erlaubt den Empfang von SMS oder den Aufbau von Daten- und Sprechverbindungen.

Mit Hilfe einer entsprechenden Software kann die aktuelle Position auf digitalen Karten angezeigt werden. Zur Navigation können ebenfalls Kurs und Richtung bestimmende, luftfahrtrelevante Positionen (Flugplätze, Navigationsanlagen, Wegpunkte) angezeigt werden. Diese luftfahrtrelevanten Datenbanken müssen regelmäßig auf den neuesten Stand gebracht werden, was mit Hilfe des zugeschalteten GSM-Moduls erfolgt. Das Verfahren gemäß der Erfindung läuft dabei wie folgt ab.

Nach dem Einschalten des Systems im am Boden stehenden Flugzeug meldet sich das System beim Dienstanbieter an. Danach wird vom Dienstanbieter geprüft, ob die Datenbank und andere Daten auf dem letzten Stand sind. Gegebenenfalls werden Datensätze korrigiert, gelöscht oder ergänzt. Falls vor dem Einschalten mit einem anderen Rechner oder im Internet ein Flug geplant wurde, wird der entsprechende Flugplan übertragen. Dabei können aktuelle Daten, wie Wetter und Notam, ebenfalls geladen werden.

Eine spezielle Software achtet auf die Datenintegrität und die optimierte Verwendung des Datenkanals.

Nach dem Flug wird ebenfalls kurz die Start- und Landezeit übertragen sowie mit entsprechender Bordausrüstung die durchflogenen Wetterdaten übertragen, um dann anderen Benutzern eine präzise Wettervorhersage mitzuteilen.

Ergänzend kann in Fig. 1 das GSM-Modul 5 auch durch ein CDPD-Modul ersetzt werden, da dieses z. B. in USA verbreitet ist. Dadurch kann auch ein Dienst, der ebenfalls auf dem zellularen Telefonsystem basiert, angewendet werden.

In Fig. 2 ist ein Gehäuse 7 mit einer Halterung 8 und einer Rückwand 9 dargestellt. Das Gehäuse 7 weist an der Vorderseite einen Bildschirm 10 auf. Das Gehäuse ist teilweise aufgeschnitten, wobei an der hinteren Ecke das Modul 11, das dem Blockdiagramm von Fig. 1 entspricht, angeordnet ist. Dieses Modul ist mit einer in Fig. 1 dargestellten Antenne 12 des Funktelefonsystems verbunden.

## Patentansprüche

1. Verfahren zur Zustellung von luftfahrtrelevanten Daten an Datenbanken in aus Rechen- und Speichereinheit mit Anzeigeeinheit bestehende Navigationsgeräte in Flugzeugen, ***dadurch gekennzeichnet,* daß** die Daten von einem Dienstanbieter als Sender über GSM-Module (5) eines Funktelefonbetreibers an die Rechen- und Speichereinheit (1) des Navigationsgerätes übermittelt werden.

2. Verfahren nach Anspruch 1, ***dadurch gekennzeichnet*, daß** nach dem Einschalten des Systems am Boden von diesem geprüft wird, ob die Datenbank und andere Daten auf den letzten Stand gebracht sind, und ggf. Datensätze korrigiert, gelöscht oder ergänzt werden müssen.

3. Anordnung zur Durchführung des Verfahrens nach Anspruch 1 und 2, ***dadurch gekennzeichnet*, daß** die Rechen- und Speichereinheit (1) des Navigationsgerätes im Flugzeug mit einem in der Funktelefontechnologie üblichen GSM-Modul (5) mit Antenne (12) und einem entsprechenden GSM-Zugang beim Datenversender angeordnet ist.

4. Anordnung zur Durchführung des Verfahrens nach Anspruch 1 und 2, ***dadurch gekennzeichnet*, daß** die Rechen- und Speichereinheit (1) des Navigationsgerätes im Flugzeug mit einem in der Funktelefontechnologie üblichen CDPD -Modul mit Antenne und einem entsprechenden CDPD-Zugang (6) beim Datenversender angeordnet ist.
